# EUROPEAN PATENT APPLICATION

(11) **EP 2 116 777 A2**
(43) Date of publication of application: **11.11.2009**
(21) Application number: 09158838.4
(22) Date of filing: 27.04.2009
(51) Int. Cl.: F24D 12/02, F24H 8/00

(54) **Condensate Heat Exchanger**

(30) Priority: 08.05.2008 GB 0808358
(71) Applicant: Zenex Technologies Limited, Exeter Devon EX1 1NT (GB)
(72) Inventor: Farrell, Christopher, Rodborough, Plymouth PL6 7EZ (GB); Billett, Robert, Corston Bath and North East Somerset BA2 9BA (GB)
(74) Representative: Beck, Simon Antony

(57) **Abstract**

Many dwellings use condensing boilers as their source of heating and domestic hot water because such boilers offer increased efficiency when compared to non-condensing boilers. The operation of a condensing boiler is well known and need not be described in detail here. However, by way of a reminder, a condensing boiler seeks to cool the gas produced from its burner portion to below the dew point such that water vapour in the heated gas starts to condense thereby giving up its latent heat of vaporisation. In practise this means seeking to cool the flue gas to below 58°C or thereabouts. The condensate, which still has a temperature of around 57°C or 58°C is then ducted along a drain path and expelled. The present invention relates to a condensate heat exchanger for use with a condensing boiler, characterised by a heat exchanger being placed in a condensate drain path for draining condensate from the boiler.

## Description

### FIELD OF THE INVENTION

The present invention relates to a condensate heat exchanger.

### BACKGROUND OF THE INVENTION

Many dwellings use condensing boilers as their source of heating and domestic hot water because such boilers offer increased efficiency when compared to non-condensing boilers. The operation of a condensing boiler is well known and need not be described in detail here. However, by way of a reminder, a condensing boiler seeks to cool the gas produced from its burner portion to below the dew point such that water vapour in the heated gas starts to condense thereby giving up its latent heat of vaporisation. In practise this means seeking to cool the flue gas to below 58°C or thereabouts. The condensate, which still has a temperature of around 57°C or 58°C is then ducted along a drain path and expelled.

### SUMMARY OF THE INVENTION

The present invention relates to a condensate heat exchanger for use with a condensing boiler, characterised by a heat exchanger being placed in a condensate drain path for draining condensate from the boiler.

The inventor has realised that the condensate from the boiler carries useful heat which may further be recovered.

It has been recognised that the combustion process generates water vapour, and that causing the water vapour to condense allows the latent heat of vapourisation to be given up. This is exploited by recovery systems that act on the flue gas.

An example of such a system is disclosed in GB 2 382 403 where water is sprayed into the flue gas to cause condensation to occur. The water is collected in a sump where it can deliver up its heat via a heat exchanger. The water is then pumped back to a spray bar and the process is repeated. Excess water from the sump is run to waste.

The use of a pumped system is complex.

WO2006/051266 discloses a flue gas heat recovery unit where condensate in the flue gas is captured to form a heat store medium. The captured heat can be returned to warm water entering the boiler.

Any excesses condensate is returned to the boiler condensate drain system.

Furthermore, even for boilers that do not have any heat recovery devices in the flue or flue gas path, there is still a need to provide a drain path for condensate that forms within the boiler or that forms in the flue but runs back into the boiler.

Thus, unlike the flue gas heat recovery devices, the invention recovers heat from condensate that is in a discharge path from the boiler. It can do this irrespective of whether any flue gas heat recovery device is installed.

Preferably the condensate heat exchanger includes a vessel in which a volume of condensate may be stored, and a heat exchange path in thermal contact with the condensate such that heat in the condensate can be transferred to a further fluid. Advantageously the further fluid is water in the cold water main which, in use, is heated by the boiler to provide domestic or potable hot water.

Advantageously the condensate heat exchanger may co-operate with a further heat recovery device placed in the flue gas path from the boiler such that water flows through these devices in series prior to being admitted into the boiler for heating.

According to a further aspect of the present invention there is provided a combination of a condensing boiler and a condensate heat exchanger.

### BRIEF DESCRIPTION OF THE DRAWINGS

The present invention will further be described, by way of non-limiting example only, with reference to the accompanying drawings, in which:
Figure 1 illustrates a condensate heat exchanger in detail, and schematically shows its connections to a condensing boiler;

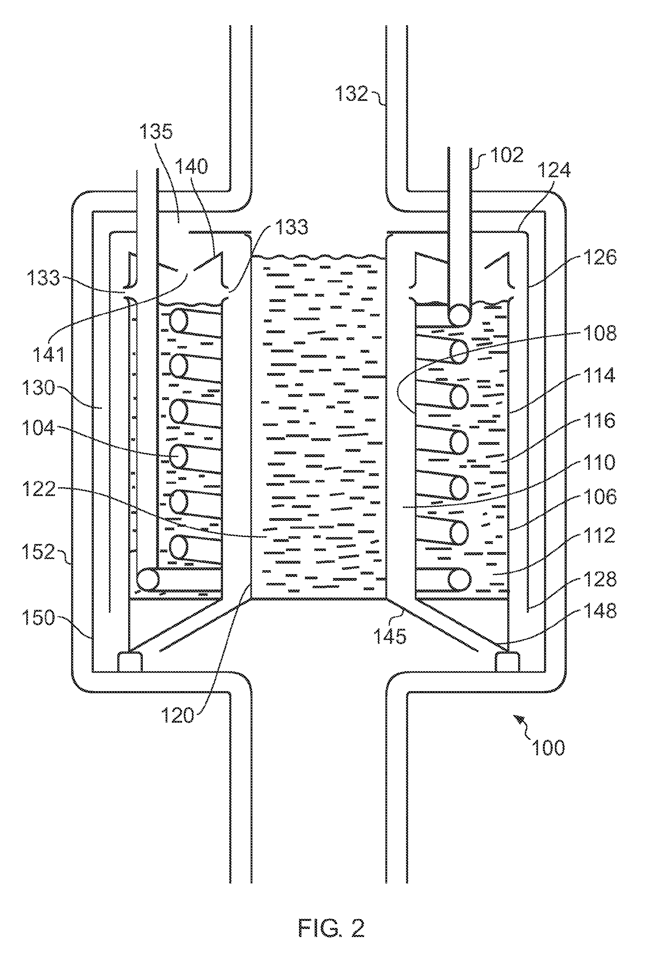

Figure 2 shows the construction of a further heat exchange device which may be placed in the boiler flue gas flow path;
Figure 3a and Figure 3b schematically illustrate possible connection arrangements between the boiler and the further heat exchanger; and
Figure 4 shows measurements of condensation volume as a function of boiler load with the boiler operating under steady state conditions.

### DESCRIPTION OF PREFERRED EMBODIMENTS OF THE INVENTION

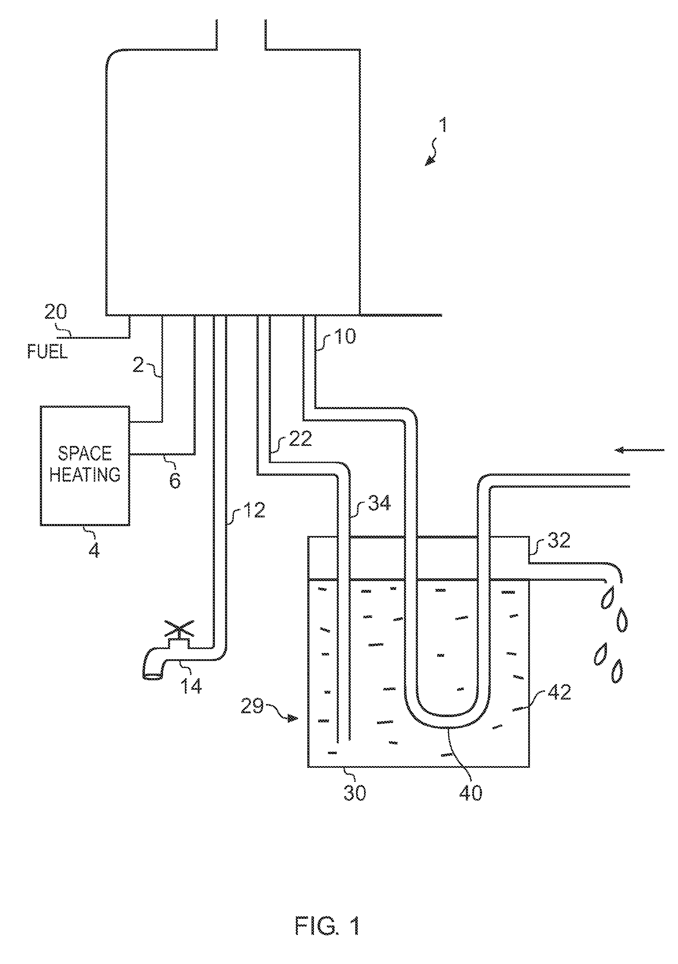

Figure 1 schematically illustrates an embodiment of a condensate heat exchanger for use with a condensing boiler. The relative sizes of the boiler and the condensate heat exchanger shown in Figure 1 are not to scale.

A condensing boiler, generally designated 1, is a well known item and need not be described in detail. However, as is known to the person skilled in the art, the boiler 1 has several interfaces such that it can provide warmed water along a first outlet 2 to a space heating system 4 and receive cooled water along a return path 6. Typically the boiler 1 should be matched to the space heating system 4 such that the water flowing along the delivery path 2 to the space heating system 4 is between 15°C to 20°C warmer than the water being returned to the boiler along the return path 6. The boiler also has a cold water main inlet 10 for receiving water that is to be heated to provide hot water along a hot water outlet path 12 for supply to one or more taps 14.

In use the boiler receives fuel, such as gas or oil along a fuel inlet path 20 and combusts this in an air flow in order to generate warm air which is then passed over a primary heat exchanger internal to the boiler in order to provide hot water to the space heating circuit. In many systems the primary heat exchanger is selectively connectable to a further heat exchanger, typically a plate heat exchanger, in order to provide heat to water from the cold main such that warm water can be delivered along the hot water path 12 to the taps 14. Because the fuel is a hydrocarbon, one of the combustion products is water, although because of the temperatures involved this is in its vapour state.

The condensing boiler achieves greater efficiencies compared to a non-condensing boiler because in its condensing mode of operation it causes the combustion gas to be cooled below the dew point, which is roughly 57°C to 58°C, at which the water vapour starts condensing within the boiler, such that the condensed water gives up its latent heat of vaporisation. The condensed combustion products are then directed towards a condensate drain 22 and in prior art systems were merely discharged from the boiler to a drain, typically outside the dwelling.

The inventor realised that the discarded condensate was still typically at between 55°C and 57°C and hence carries a useful amount of thermal energy. In fact, the discarded condensate is at a temperature in excess of that typically delivered by the boiler to the hot water tap 14. Thus useful heat could still be extracted from the condensate that would otherwise be discharged.

In one embodiment, the condensate heat exchanger 29 comprises a vessel 30 having an inlet 34 and an outlet, 32. The inlet can conveniently be formed by a pipe 34 connected to the condensate drain 22 and extending towards the bottom of the vessel 30. A fluid flow path, for example in the form of a further pipe 40 passes through the condensate and extends between a cold water main and the cold water inlet of the boiler 10. The pipe 40 could pass through the centre of the vessel 30 or, as shown, could have a "U" shape such that any connections or holes that need to be formed in the vessel 30 are formed in an upper region thereof, and in fact the only place that fluid could leak from is the connection to the outlet pipe 32. This construction simplifies production of the condensate heat exchanger.

In use, when the boiler is operating warm condensate from the boiler is ducted along the condensate drain 22 and pipe 34 into the condensate heat exchanger 30. The condensate fills up the volume of the heat exchanger 30 until it reaches the level of the outlet 32 from where excess condensate is drained. When the boiler operates in water heating mode, it draws water from the cold main, and that water passes through the pipe 40 thereby picking up heat from the condensate 42 stored in the condensate heat exchanger 30. Thus some of the heat from the condensate is recovered. Once the boiler returns to operating in space heating mode, fresh condensate is delivered into the condensate heat exchanger 30 which displaces the now cold condensate from the heat exchanger and warms it up again such that, heat is available for delivery into the water supplied from the cold main to the boiler when the boiler is initially run in water heating mode.

The boiler may be operated with a further heat exchange device, such as that described in W02006/051266, the teachings of which are incorporated herein by reference. That patent application describes a heat exchanger which comprises a cold water pipe 102 which is bent into a helical portion 104 so as to provide a large pipe surface area within a compact volume. The helical portion 104 of the pipe is disposed within a double walled vessel 106. An inner wall 108 of the double walled vessel defines a channel 110 which is open at both ends and to which hot flue gases can flow. A volume 112 defined between the inner wall 108 and the outer wall 114 of the double walled vessel 106 is filled with water 116 so as to form a thermal store.

Thus, comparing this heat exchanger with a conventional heat exchanger design rather than the helical portion 114 being placed directly into the gas flow path 110, the helical portion 104 is instead placed in a fluid reservoir where the fluid is heated by gas passing through the gas flow path 110. This means that, compared to a normal heat exchanger, the heat capacity of this heat exchanger is greater.

The top of the heat exchanger is open such that water derived from the condensate from the flue gas can enter into the exchanger thereby keeping it topped up whilst also keeping it vented to atmospheric pressure thereby avoiding any risk of rupture associated with pressure in enclosed vessels. The heat exchanger may optionally include a further reservoir 120 having a closed lower end which is coaxially disposed within the gas flow path. The reservoir 120 contains water and hence the hot flue gases flowing along the channel 110 now give out heat to both the water 116 close within the double walled vessel 106 and also the water 122 enclosed within the reservoir 120. A flange 124 extends radially outwards from the top of the reservoir 120 passing over the upper surface of the vessel 106 and joining with a further wall 126 which envelopes the exterior wall 114 of the vessel 106. The flange 124 and the wall 126 serve to define a further gas flow path which causes the hot flue gas from the boiler to travel over the top of the vessel 106 and then down the outside of the vessel 106 thereby giving further heat exchange possibilities.

Optionally apertures 133 can be formed in the walls 108, 114 of the vessel 106 so as to define the maximum level of the water contained therein. Optionally a diffuser 145 may also be provided at the bottom most portion of the further heat exchanger so as to cause the gas to distribute evenly within it.

In use, heat from the flue gas is delivered into the water/condensate mix within the vessels. In use water flowing within the pipe 102, such as from the cold main, picks up heat that has been stored in the condensate and delivers this to the boiler, thereby reducing, at least initially, the temperature rise that the boiler needs to impart of the water.

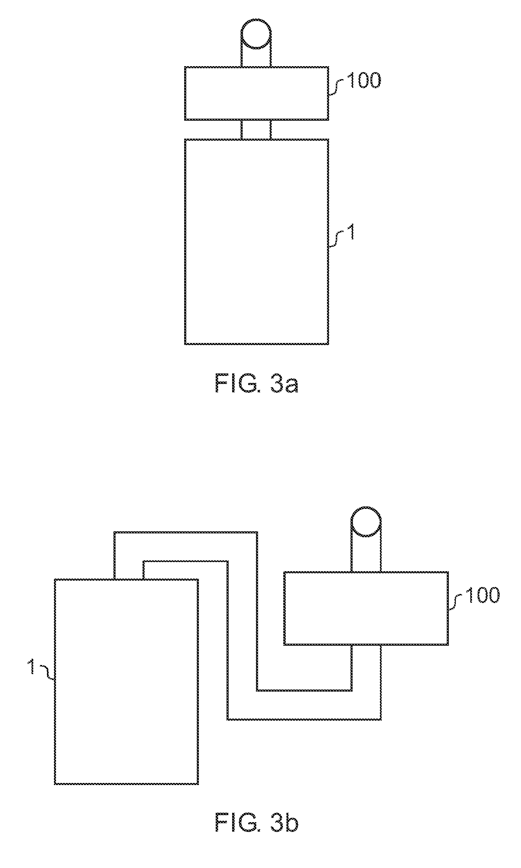

The further heat exchanger 100 may be placed directly above the boiler 1 as shown in Figure 3a, or placed to one side as shown in Figure 3b.

The further heat exchanger, as described in W02006/051266, is commercially available under the trade mark "Gas Saver".

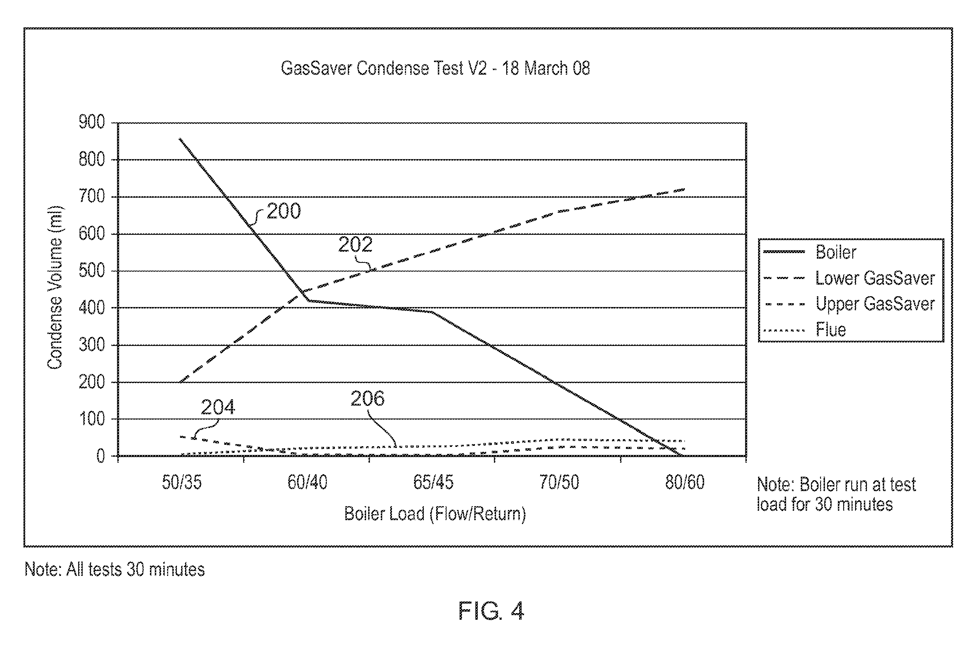

Figure 4 shows measurements of condensate volume through a boiler running over a half hour period at a steady state load. The abscissa shows the flow and return temperatures of the boiler in degrees centigrade delivered to a space heating circuit. Whereas the ordinate shows the condensate volume in millilitres. It can be seen that at a flow temperature of 50°C and return temperature of 35°C the boiler was operating nicely in a condensing mode and produces approximately 850 millilitres of condensate per half hour. The heat exchange properties of the further heat exchanger also causes further condensation to occur. Condensation occurring in the lower portion of the gas saver is represented by the line 202 whereas condensation occurring at the other portion of the gas saver is represented by the line 204. Condensation occurring within the flue is also measured and is represented by line 206.

It can be seen that as the boiler load increases such that the flow temperature raises to 60°C and return to 40°C that the volume of condensate available from the boiler reduces significantly to around 400 millilitres per half hour whereas the condensate return from the gas saver increased to around 450 millilitres per hour. Thus, under these conditions a flow of approximately 850 millilitres per half hour is still maintained to the condensate heat exchanger. As the temperature rises further the condensate flow from the boiler decreases whereas that available from the gas saver increases. By the time the flow temperature reaches 70°C and the return reaches 50°C the boiler now only produces 200 millilitres of condensate every half hour but the gas saver produces 650. Thus, the flow into the condensate heat exchanger is still approximately 850 millilitres per half hour. The volume of the condensate store 30 is selected to provide a sufficiently large store of energy for heat savings to be worthwhile, whilst not being so large but its recovery time to 40°C or more becomes excessively long.

Water passing through the condensate heat exchanger and/or gas saver where it is provided may, as shown in Figure 1, pass directly into the boiler, or may be blended with a further flow path of water directly from the cold main as described in W02006/051259.

It is thus possible to provide an inexpensive and reliable heat recovery device to recover heat from condensate which, up to now, has traditionally been discarded from condensing boilers.

## Claims

1. A condensate heat exchanger for use with a condensing boiler, **characterised by** the heat exchanger (29) being placed in a condensate drain path (10) for draining condensate from the boiler.

2. A condensate heat exchanger as claimed in claim 1, **characterised by** comprising a vessel (30) for storing condensate, and a fluid flow path (40) for a fluid being in thermal contact with condensate in the vessel.

3. A condensate heat exchanger as claimed in claim 2, **characterised in that** the fluid flow path is a pipe (40) passing through condensate stored within the vessel.

4. A condensate heat exchanger as claimed in claim 2 or 3, in which the fluid flow path carries water from a cold main for delivery to a boiler for heating.

5. A condensate heat exchanger as claimed in any one of the preceding claims in combination with a condensing boiler.

6. A combination as claimed in claim 5, further comprising at least one additional heat recovery device (100) placed in a flue gas path from the boiler.

7. A combination as claimed in claim 6, in which cold water from a water main flows in series through the condensate heat exchanger and the at least one additional heat recovery device.

8. A combination as claimed in claim 6 or 7, wherein the further heat recovery device includes a thermal store.

9. A combination as claimed in claim 8, in which the thermal store is replenished by condensate from the flue gas.
